**Europäisches Patentamt**

**European Patent Office**

**Office européen des brevets**

(19)

(11) Publication number : **0 491 101 B1**

# (12) EUROPEAN PATENT SPECIFICATION

(45) Date of publication of patent specification :
**24.11.93 Bulletin 93/47**

(51) Int. Cl.⁵ : **C09D 5/00,** C09K 3/30

(21) Application number : **90313946.7**

(22) Date of filing : **19.12.90**

(54) **Aerosol coating composition for making a suede-like coating.**

(43) Date of publication of application :
**24.06.92 Bulletin 92/26**

(45) Publication of the grant of the patent :
**24.11.93 Bulletin 93/47**

(84) Designated Contracting States :
**DE FR GB**

(56) References cited :
**EP-A- 0 381 454**
**DATABASE WPI, Derwent Publications Ltd.,**
**London, GB, acc. no. 78-79308; & JP-A-53 036**
**853**

(73) Proprietor : **ASAHIPEN CORPORATION**
**1-12 Tsurumi 4-chome, Tsurumiku**
**Osaka-City 538 (JP)**

(72) Inventor : **Maruyama, Shizuo**
**Asahipen Corp., 1-12 Tsurumi 4-chome**
**Tsurumiku, Osaka City, 538 (JP)**
Inventor : **Sugimoto, Hiromasa**
**Asahipen Corp., 1-12 Tsurumi 4-chome**
**Tsurumiku, Osaka City, 538 (JP)**

(74) Representative : **Copp, David Christopher et al**
**Dummett Copp & Co. 25 The Square**
**Martlesham Heath**
**Ipswich Suffolk IP5 7SL (GB)**

## Description

FIELD OF THE INVENTION

The present invention relates to an aerosol coating composition for making a suede-like coating, and more particularly to an aerosol coating composition for making a coating which has a suede-like feel and appearance.

The aerosol coating composition of the invention has delustering effects and gives both favourable softness and roughness to the material.

The aerosol coating composition is easily handled; that is, even unskilled people can use the aerosol coating composition without any difficulty.

BACKGROUND OF THE INVENTION

Coating compositions for producing a suede-like feel and appearance have been proposed. They are, however, mainly for skilled workers because of their specific constituents.

A coating composition for a suede-like coating generally includes polymer beads of various different colours in the size range 5 to 100 μm.

A high proportion of polymer beads is essential for appropriate covering and favourable finishing.

When the composition is in the form of a aerosol coating for easy handling, the volume of precipitated particles including colour polymer beads is as much as 5 to 6 times those of other spray coatings including inorganic pigments.

No major problems arise when such aerosol coating compositions are used immediately after preparation. On the other hand, when the coating composition is stored, particles including colour polymer beads gradually sediment and precipitate in the container.

The precipitated particles are not easily redispersed by simple stirring with glass beads in the container and thereby cause clogging of the nozzle.

One objective of the invention is to provide an aerosol coating composition for making a suede-like coating (suede touch and appearance); that is, exhibiting delustering effects and giving favourable softness and roughness to the material.

Another objective of the invention is to provide a composition in an aerosol coating formulation which even unskilled people can handle without difficulty.

A further objective of the invention is to provide an aerosol coating composition which is stable and can be effectively used even after long-term storage; that is particles including colour polymer beads do not undesirably precipitate to cause clogging of the nozzle.

SUMMARY OF THE INVENTION

According to the invention, there is provided an aerosol coating composition for making a suede-like coating, the composition comprising varnish containing at least one of acrylic resins, alkyd resins and cellulose or fibrine derivatives, 10 to 45 parts by weight colour polymer beads having a diameter in the range of 5 to 100 μm, 0.2 to 2.0 parts by weight of a powder of silica having an average particle diameter in the range 0.3 to 15 μm and/or polyethylene wax having an average particle diameter in the range 0.3 to 20 μm, and 23 to 79.8 parts by weight solvent.

The varnish resin preferably includes acrylic resins, alkyd resins, or cellulose or fibrine derivatives as binder.

When the content is less than 10 parts by weight, the coating composition does not give coating of sufficient thickness and properties. On the other hand, when it is greater than 30 parts by weight, the coating composition exhibits lustering effects.

When the content of polyethylene wax and/or silica content is less than 0.2 parts by weight, the powder does not sufficiently prevent precipitation of colour polymer beads. On the other hand, when it is greater than 2.0 parts by weight, the sprayed film does not have sufficient adhesion and does not have the desired waterproofing properties.

When the coating composition contains the powder in the above range, particles including the colour polymer beads do not precipitate and can be easily redispersed even after long-term storage.

Thus the composition can be uniformly sprayed on the material without causing clogging of the nozzle and can give efficient coating with desirable properties.

The silica powder has a diameter in the range 0.3 to 15 μm, and more specifically 0.7 to 6 μm diameter on average.

The polyethylene wax (on surface-treated amide coating) has an average particle size of 0.3 to 20 μm diameter, and more specifically 0.7 to 15 μm diameter on average.

1:10 through 10:1 mixture of the polyethylene wax and the silica powder may be used.

Each polymer bead may have a mixture of several different colours and may be composed of polyurethanes, polyesters, polyethylenes, polyamides, acrylic resins or modified polymers thereof.

The diameter of the beads is 5 to 100 μm, and more specifically 10 to 60 μm. When the diameter is less than 5 μm, plural colours of the polymer beads are blended to appear as a single colour on the sprayed film. On the other hand, when the diameter is greater than 100 μm, the beads precipitate in the container after longterm storage and are not easily redispersed. They may then cause clogging of the nozzle.

The particles may be spherical, concave or flat. Concave particles in particular have efficient delustering effects on suede-like coating.

The aerosol coating composition of the invention preferably also includes a wet dispersing agent, a plasticizer, an antifoamer and a drying agent.

The solvent used here may be any conventional one as long as it dissolves the varnish resin binder.

Some examples of the solvent include petroleum solvents such as toluene, xylene and mineral spirit; alcohols such as methanol, ethanol, butanol and isopropyl alcohol; esters such as ethyl acetate, butyl acetate and amyl acetate; ketones such as methyl ethyl ketone and methyl isobutyl ketone; glycol ethers such as ethylene glycol, diethylene glycol, propylene glycol and hexylene glycol; ethers such as methyl ether, ethyl ether, propyl ether and butyl ether; and acetates and propionates of glycol ethers.

Alcohols or glycol ethers are preferred when the aerosol coating composition is to be sprayed on to plastics materials.

The solvent content is preferably 23.0 to 79.8 parts by weight.

The coating composition includes appropriate amounts of a wet dispersing agent, a plasticizer, an antifoamer and a drying agent.

The invention will be more clearly understood through description of example according to the invention and comparative examples.

## EXAMPLES

Aerosol coating compositions in accordance with examples 1 through 6 according to the invention and in accordance with comparative examples 1 through 5 were prepared and stored.

Redispersibility and spraying suitability of the composition, and appearance, feel and covering power of the sprayed film were tested for each aerosol coating composition.

The Table below shows the results of the tests.

The following dispersing agents were used for comparative examples 1 through 5.

All the coating compositions of the comparative examples were not sufficiently re-dispersed after longterm storage and caused clogging of the aerosol nozzle. The dispersing agents used for the comparative examples were 0.3 to 15 μm fine powder calcium carbonate, fine powder precipitated barium sulphate, fine powder organic bentonite, fine powder hydrogenated castor oil wax, and lecithin as wet dispersing agent.

In the Table, NV% denotes proportion of non-volatile or solid elements in varnish (% by weight).

## Test Procedure

The following tests were performed on the aerosol coating composition of examples 1 through 6 and comparative examples 1 through 5. The tests were conducted using aerosol coating compositions charged to containers and stored at 45°C for 3 weeks.

1 Redispersibility

The container of each aerosol coating composition was turned upside down and shaken. Shaking was continued until the glass beads sounded. The number of shakes was counted.

2 Spraying suitability

A JIS G 3141-type cold rolled steel plate (0.3 x 70 x 15 mm) was sprayed with the test coating composition at a constant temperature (20°C), for a certain time period and through the same nozzle. Coating of the aerosol coating composition was observed. In the Table ○ denotes a favourable coating composition; that is, no macro but only microscopic particles exist in the mist.

3 Appearance

Two coats of the aerosol coating composition were sprayed onto a slate test piece. After two hours, the colour of the sprayed film was observed with naked eyes.

4 Feel

Two coats of the aerosol coating composition were sprayed onto a slate test piece. After twenty four hours, the roughness of the sprayed film was evaluated by finger-touch.

Twenty people chosen at random evaluated the appearance and feel of the sprayed film.

Full marks (10) were given to the highest rated coating and zero to the lowest rated. A coating composition between 10 and 0 was given to each coating. The numerals in the Table show the average marks of the twenty examiners.

5 Covering power

Each sprayed film was observed through a microscope.

In the Table, ○ denotes favourable covering power; that is, the test piece was sufficiently covered with the coating composition, and X denotes poor covering power.

Example 1

|  | Brand name | weight % | Maker |
|---|---|---|---|
| Alkyd vehicle (NV 50%) | Beckosol ES-5103 -50X | 30 | Dainippon Ink And Chemicals Inc. |
| Coloring urethane resin particle | Decosilk White NY-A2 | 14 | Chemische Fabrik Uetikon & Chemicals Co. Ltd. |
| Coloring urethane resin particle | Decosilk Deep black | 14 | Chemische Fabrik Uetikon & Chemicals Co. Ltd. |
| Silica fine powder (in avarage diameter of 12 μm) | Aerosil 200 | 0.5 | Nippon aerosil Co. Ltd. |
| Solvent: xylene |  | 41.5 |  |
|  |  | 100.0 |  |

Example 2

|  | Brand name | weight % | Maker |
|---|---|---|---|
| Acryl vehicle (NV 45%) | Acrydic A-181 | 33 | Dainippon Ink And Chemicals Inc. |
| Coloring urethane resin particle | Rubcouleur White | 15 | Dainichiseika Color & Chemicals Mfg. Co. Ltd. |
| Coloring urethane resin particle | Rubcouleur Red | 15 | Dainichiseika Color & Chemicals Mfg. Co. Ltd. |
| Silica fine powder (in avarage diameter of 1.8 μm) | Syloid 244 | 0.8 | Fuji-davison Chemical Co. Ltd. |
| Solvent: toluene | | 10.0 | |
| xylene | | 26.2 | |
|  |  | 100.0 |  |

### Example 3

|  | Brand name | Weight % | Maker |
|---|---|---|---|
| Acryl vehicle (NV 50%) | Hitaloid 1206 | 24 | Hitachi Chemical Co. Ltd. |
| Cellulose derivative | CAB-553-0.4 | 6 | Eastman Chemical Products, Inc. |
| Coloring acrylonitrile resin particle | Tuftic B25 White | 15 | Japan Exlan., Co. Ltd. |
| Coloring acrylonitrile resin particle | Tuftic B25 Black | 15 | Japan Exlan., Co. Ltd. |
| Silica fine powder (in avarage diameter of 3.5 $\mu$m) | Syloid 74 | 1.2 | Fuji-davison Chemical Co. Ltd. |
| Solvent: etyl acetate | | 8.0 | |
| methyl isobutylketone | | 5.0 | |
| isopropyl alcohol | | 6.0 | |
| butyl | | 2.0 | |
| toluene | | 15.3 | |
| Plasticizer: DOP(Dioctylphtalate) | | 2.5 | |
| | | 100.0 | |

### Example 4

|  | Brand name | weight % | Maker |
|---|---|---|---|
| Cellulose derivative /Alkyd lacquer (NV 26%) | Clear Lacquer | 60 | Aasahipen corporation |
| Coloring nylon resin particle | Lylsan 1048 Red | 15 | Lylsan INC. |
| Coloring nylon resin particle | Lylsan 2117 Blue | 15 | Lylsan INC. |
| Silica fine powder (in avarage diameter of 4 $\mu$m) | CK-412 | 1.2 | Nippon aerosil Co.Ltd. |
| Solvent: etyl acetate | | 2.5 | |
| xylene | | 6.3 | |
| | | 100.0 | |

Example 5

|  | Brand name | Weight % | Maker |
|---|---|---|---|
| Alkyd vehicle (NV 50%) | Beckosol ES-5103 -50X | 33 | Dainippon Ink And Chemicals Inc. |
| Coloring urethane resin particle | Decosilk White NY-A2 | 14 | Chemische Fabrik Uetikon & Chemicals Co.Ltd. |
| Coloring urethane resin particle | Decosilk Deep black | 14 | Chemische Fabrik Uetikon & Chemicals Co.Ltd. |
| Polyetylenewax (NV 10%) (in avarage diameter of $7 \mu$m) | Disperon 4200-10 | 5.0 | Kusumoto Chemical Co.Ltd. |
| Solvent: xylene |  | 37.0<br>100.0 |  |

Example 6

|  | Brand name | Weight % | Maker |
|---|---|---|---|
| Acryl vehicle (NV 45%) | Acrydic A-181 | 33 | Dainippon Ink And Chemicals Inc. |
| Coloring urethane resin particle | Rubcouleur White | 15 | Dainichiseika Color & Chemicals Mfg. Co. Ltd. |
| Coloring urethane resin particle | Rubcouleur Red | 15 | Dainichiseika Color & Chemicals Mfg. Co. Ltd. |
| Polyetylenewax (in avarage diameter of $10 \mu$m) | Ceridust 130 | 0.5 | Hoechst Japan Co. Ltd. |
| Solvent: toluene xylene |  | 10.0<br>26.5<br>100.0 |  |

Comparative Example 1

|  | Brand name | weight % | Maker |
|---|---|---|---|
| Alkyd vehicle (NV 50%) | Beckosol ES-5103 -50X | 30 | Dainippon Ink And Chemicals Inc. |
| Coloring urethane resin particle | Decosilk White NY-A2 | 14 | Chemische Fabrik Uetikon & Chemicals Co. Ltd. |
| Coloring urethane resin particle | Decosilk Deep black | 14 | Chemische Fabrik Uetikon & Chemicals Co. Ltd. |
| Micronized calcium carbonate (in avarage diameter of 0.08 μm) | Neolite SP-100 | 0.5 | Takehara Chemical Co. Ltd. |
| Solvent: xylene |  | 41.5 |  |
|  |  | 100.0 |  |

Comparative Example 2

|  | Brand name | weight % | Maker |
|---|---|---|---|
| Acryl vehicle (NV 45%) | Acrydic A-181 | 33 | Dainippon Ink And Chemicals Inc. |
| Coloring acryl resin particle | Rubcouleur White | 15 | Dainichiseika Color & Chemicals Mfg. Co. Ltd. |
| Coloring acryl resin particle | Rubcouleur Red | 15 | Dainichiseika Color & Chemicals Mfg. Co. Ltd. |
| Precipitated barium sulfate (in avarage diameter of 0.7 μm) | Precipitated barium sulfate 100 | 0.8 | Sakai Chemical Co. Ltd. |
| Solvent: toluene xylene |  | 10.0 26.2 |  |
|  |  | 100.0 |  |

Comparative Example 3

| | Brand name | weight % | Maker |
|---|---|---|---|
| Acryl vehicle (NV 50%) | Hitaloid 1206 | 24 | Hitachi Chemical Co. Ltd. |
| Cellulose derivative | CAB-553-0.4 | 6 | Eastman Chemical Products, Inc. |
| Coloring acrylonitrile resin particle | Tuftic B25 White | 15 | Japan Exlan. Co. Ltd. |
| Coloring acrylonitrile resin particle | Tuftic B25 Black | 15 | Japan Exlan. Co. Ltd. |
| Micronized organic bentonite (in avarage diameter of 0.5 $\mu$m) | New-D-orben | 0.8 | Shiraishi Industry Co.Ltd. |
| Solvent: ethyl acetate | | 8.0 | |
| methylisobutylketone | | 5.0 | |
| isopropyl alcohol | | 6.0 | |
| butylcellosolve | | 2.0 | |
| toluene | | 15.7 | |
| Plasticizer: DOP (Dioctylphtalate) | | 2.5 | |
| | | 100.0 | |

Comparative Example 4

| | Brand name | weight % | Maker |
|---|---|---|---|
| Cellulose derivative /Alkyd lacquer (NV 26%) | Clear Lacquer | 60 | Aasahipen Corporation |
| Coloring nylon resin particle | Lylsan 1048 Red | 15 | Lylsan INC. |
| Coloring nylon resin particle | Lylsan 2117 Blue | 15 | Lylsan INC. |
| Dispersing agent lecithin | | 0.7 | Nikko oil Mfg. Co. Ltd. |
| Solvent: etyl acetate | | 2.5 | |
| xylene | | 6.8 | |
| | | 100.0 | |

Comparative Example 5

|  | Brand name | Weight % | Maker |
|---|---|---|---|
| Alkyd vehicle (NV 50%) | Beckosol ES-5103 -50X | 33 | Dainippon Ink And Chemicals Inc. |
| Coloring urethane resin particle | Decosilk White NY-2 | 14 | Chemische Fabrik Uetikon & Chemicals Co. Ltd. |
| Coloring urethane resin particle | Decosilk Deep black | 14 | Chemische Fabrik Uetikon & Chemicals Co. Ltd. |
| Halogenated castor oil wax (in avarage diameter of 8 $\mu$m) | Disperon 305 | 0.5 | Kusumoto Chemical Co. Ltd. |
| Solvent: xylene |  | 41.5 |  |
|  |  | 100.0 |  |

## TABLE

| | Redispersi bility (number of times) | Spraying suitability of the coating | Appearance ※ | Touch ※ | Covering Power ※ |
|---|---|---|---|---|---|
| Example 1 | 5 | ◯ | 8.5 | 8.9 | ◯ |
| Example 2 | 6 | ◯ | 8.2 | 7.8 | ◯ |
| Example 3 | 8 | ◯ | 7.6 | 7.4 | ◯ |
| Example 4 | 5 | ◯ | 6.8 | 7.2 | ◯ |
| Example 5 | 7 | ◯ | 8.3 | 8.7 | ◯ |
| Example 6 | 6 | ◯ | 7.9 | 8.2 | ◯ |
| Comparativ Example 1 | 7 8 | ◯ | 2.1 | 3.5 | ◯ |
| Comparativ Example 2 | 8 3 | some time clogging poor micronization | 2.3 | 2.6 | × |
| Comparativ Example 3 | 7 3 | ◯ | 3.4 | 4.5 | ◯ |
| Comparativ Example 4 | 8 9 | some time clogging poor micronization | 1.8 | 2.3 | × |
| Comparativ Example 5 | 9 3 | ◯ | 1.6 | 3.5 | ◯ |

※ Appearance, Touch, Covering Power of the sprayed film were tested for each aerosol coating composition.

The aerosol coating composition described can give suede-like coating (suede-like touch and appearance); that is, exhibiting delustering effects and giving favourable softness and roughness to the material.

The composition can be made up as aerosol coating compositions which even unskilled people can handle without difficulty.

Aerosol coating compositions as described are stable and can be effectively used even after long-term storage; that is particles including colour polymer beads do not undesirably precipitate to cause clogging of the nozzle.

## Claims

1. An aerosol coating composition for making a suede-like coating characterised in that it comprises 10 to 30 parts by weight of a varnish resin including at least one of acrylic resins, alkyd resins, and cellulose or fibrine derivatives, 10 to 45 parts by weight colour polymer beads having a diameter in the range of 5 to 100 μm, 0.2 to 2.0 parts by weight of a powder of silica having an average particle diameter in the range 0.3 to 15 μm and/or polyethylene wax having an average particle diameter in the range 0.3 to 20 μm, and 23 to 79.8 parts by weight solvent.

2. A composition as claimed in Claim 1, wherein the silica powder has an average particle diameter in the range 0.7 to 6 μm.

3. A composition as claimed in Claim 1 or Claim 2, wherein each colour polymer bead is a mixture of several different colours.

4. A composition as claimed in any preceding claim, wherein the polymer beads have a diameter in the range 10 to 60 μm.

5. A composition as claimed in any preceding claim, wherein the beads are concave particles.

6. A composition as claimed in any preceding claim, including a moisture dispersing agent, a plasticizer, an antifoamer and a drying agent.


**Patentansprüche**

1. Aerosolzusammensetzung zur Herstellung einer wildlederartigen Beschichtung, **dadurch gekennzeichnet,** daß sie 10-30 Gewichtsanteile eines Lackharzes , das zumindestens eines der Bestandteile Acrylharz, Alkydharz und Zellulose oder Fibrinderivate aufweist, 10-45 Gewichtsanteile farbige Polymer-Partikel mit einem Durchmesser im Bereich von 5 bis 100 μm, 0,2 bis 2,0 Gewichtsanteile Kieselerde-Puder mit einem Partikeldurchmesser zwischen 0,3 bis 15 μm und/oder Polyethylen-Wachs mit einem Partikeldurchmesser zwischen 0,3 und 20 μm und 23 bis 79,8 Gewichtsanteile Lösungsmittel enthält.

2. Aerosolzusammensetzung nach Anspruch 1, **dadurch gekennzeich- net,** daß der Kieselerde-Puder einen durchschnittlichen Partikeldurchmesser zwischen 0,7 und 6 μm aufweist.

3. Aerosolzusammensetzung nach Anspruch 1 oder 2, **dadurch gekenn- zeichnet,** daß jedes Farb-Polymer-Partikel aus einer Mischung unterschiedlicher Farben besteht.

4. Aerosolzusammensetzung nach mindestens einem der Ansprüche 1 bis 3, **dadurch gekennzeichnet,** daß die Polymer-Partikel einen Durchmesser zwischen 10 und 60 μm aufweisen.

5. Aerosolzusammensetzung nach mindestens einem der Ansprüche 1 bis 4, **dadurch gekennzeichnet,** daß die Polymer-Partikel konkave Form aufweisen.

6. Aerosolzusammensetzung nach mindestens einem der Ansprüche 1 bis 5, **dadurch gekennzeichnet,** daß sie ein Wasser dispergierendes Mittel, einen Weichmacher, ein Antischaummittel und ein Trocknungsmittel enthält.


**Revendications**

1. Composition de revêtement, sous forme d'aérosol, pour obtenir un revêtement ayant un aspect suédé, composition caractérisée en ce qu'elle comprend 10 à 30 parties en poids d'une résine de vernis comportant au moins l'un(e) du groupe comprenant les résines acryliques, résines alkydes et dérivés de cellulose ou de fibrine, 10 à 45 parties en poids de perles polymères de couleur ayant un diamètre compris entre 5 et 100 μm, 0,2 à 2,0 parties en poids d'une poudre de silice ayant un diamètre particulaire moyen compris entre 0,3 et 15 μm et/ou de la cire de polyéthylène ayant un diamètre particulaire moyen compris entre 0,3 et 20 μm, et 23 à 79,8 parties en poids de solvant.

2. Composition telle que revendiquée à la revendication 1, dans laquelle la poudre de silice a un diamètre particulaire moyen compris entre 0,7 et 6 μm.

3. Composition telle que revendiquée à la revendication 1 ou à la revendication 2, dans laquelle chaque perle polymère de couleur est un mélange de plusieurs couleurs différentes.

4. Composition telle que revendiquée dans l'une quelconque des revendications précédentes, dans laquelle les perles polymères ont un diamètre compris entre 10 et 60 μm.

5. Composition telle que revendiquée dans l'une quelconque des revendications précédentes, dans laquelle les perles sont des particules concaves.

6. Composition telle que revendiquée dans l'une quelconque des revendications précédentes, comprenant un agent de dispersion de l'humidité, un plastifiant, un anti-mousse et un agent siccatif.